# EUROPÄISCHE PATENTANMELDUNG

(11) **EP 1 571 818 A2**
(43) Veröffentlichungstag der Anmeldung: **07.09.2005**
(21) Anmeldenummer: 04009933.5
(22) Anmeldetag: 27.04.2004
(51) Int. Cl.: H04M 11/06

(54) **Telekommunikationseinrichtung**

(30) Priorität: 03.03.2004 DE 102004010991
(71) Anmelder: DeTeWe Systems GmbH, 10997 Berlin (DE)
(72) Erfinder: Wellhausen, Thomas, 14193 Berlin (DE); Gadow, Ivo, 13355 Berlin (DE)

(57) **Zusammenfassung**

Eine Kommunikationseinrichtung zur Bereitstellung von Verbindungen für einen Sprachdatentransfer und Digitaldatentransfer zwischen digitalen Telekommunikationsendgeräten, analogen Telekommunikationsendgeräten und Datenverarbeitungsgeräten enthält einen xDSL-Terminaladapter (1) zum eigenständigen Verbindungsaufbau und Verbindungsabbau sowohl in einem öffentlichen Telekommunikationsnetz (ISDN, POTS, PSTN 3) also auch im Internet (2) mit
- einem xDSL-Modem (10), das an eine xDSL-Datenleitung (14) oder an eine Breitbandverbindung angeschlossen ist,
- einen mit dem xDSL-Modem (10) verbundenen ISDN-Signalwandler (1) mit mindestens einem S₀-Anschluss (15, 16) für ISDN-Endgeräte (4) und
- einen mit dem xDSL-Modem (10) verbundenen Analog-Signalwandler (12) mit mindestens einem a/b-Anschluss (17, 18) für analoge Endgeräte (5).

## Beschreibung

Die Erfindung bezieht sich auf eine Telekommunikationseinrichtung zur Bereitstellung von Verbindungen für einen Sprachentransfer und Digitaldatentransfer zwischen digitalen Telekommunikations-Endgeräten, analogen Telekommunikations-Endgeräten und Datenverarbeitungsgeräten.

Bei der heute üblichen Kommunikation über Signalleitungen besteht das Problem, dass verschiedene Übertragungsmethoden und Übertragungsprotokolle verwendet werden. So werden für die Signalübertragung mit analogen Signalen PSTN-Leitungen (Public Switch Telefon Network) eines POTS (Plain Old Telephon Service) genutzt, über die Sprachnachrichten, Telefaxsignale oder auch digitale Dateien zwischen Endgeräten wie Telefonen, Telefaxgeräten oder Computern ausgetauscht werden. Für eine Umsetzung der analogen Signale wie Tonfrequenzsignale der Telefonleitung in digitale Signale wie binäre Signale eines Computers oder von digitalen in analoge Signale werden Modems verwendet.

Bei den heutigen Anforderungen an die zu übertragenden Datenmengen ist die analoge Signalübertragung nur beschränkt geeignet. Aus diesem Grunde werden digitale Übertragungsmethoden und Übertragungsprotokolle wie ISDN-, xDSL- oder ATM-Systeme für die Signalübertragung genutzt. ISDN bezeichnet ein dienstintegrierendes digitales Telefonnetz, xDSL einen allgemeinen Ausdruck für einen Hochgeschwindigkeits-DSL (Digital Subscriber Line) bei dem x durch A für eine asynchrone DSL-Übertragungstechnik (ADSL), S für eine synchrone DSL-Übertragungstechnik (SDSL), VDSL usw. ersetzt wird, und ATM-Systeme (Asynchroner Transfer Modus) ein digitales Verfahren hoher Bandbreite bezeichnet. Bei der DSL-Übertragungstechnik können Übertragungsgeschwindigkeiten von bis zu 10 Mbit/s erreicht werden. Wird die xDSL-Übertragungstechnik gleichzeitig mit einem öffentlichen Kommunikationsnetz betrieben, so wird das öffentliche Kommunikationsnetz in einem unteren Frequenzband und die xDSL-Übertragungstechnik in einem darüber liegenden Frequenzband realisiert, was sowohl teilnehmer- und netzseitig einen Splitter erfordert, mit dem die Trennung der beiden Frequenzbänder durchgeführt wird.

Um die hohen Datenraten zu erzielen, erfordern ISDN und xDSL-Dienste besondere Kommunikationseinrichtungen mit ISDN-Anschlussadaptern. Dabei formt ein sendender ISDN-Anschlussadapter digitale Werte in Pakete oder Rahmen mit digitaler Information und sendet diese Pakete unter Benutzung eines digitalen Übertragungsschemas, das sicherstellt, dass der serielle Datenstrom zuverlässig geliefert wird. Ein empfangender ISDN-Anschlussadapter führt die gegensätzliche Funktion aus, nämlich das Extrahieren von digitalen Werten aus empfangenen Paketen mit digitaler Information.

Aus der DE 100 39 402 A1 ist ein Verfahren zum Realisieren von Internet-Telefonie-Diensten zwischen Telefonen unter Verwendung von Terminaladaptern im öffentlichen Fernsprechnetz wie PSTN-Terminaladaptern oder ISDN-Terminaladaptern (Integrated Services Digital Network = digitales Netz für integrierte Dienste) bekannt. Die Terminaladapter des Internet-Telefonie-Systems sind dabei so ausgebildet, dass sie einerseits zwischen einem der Telefone und dem Internet eine Schnittstelle ausbilden, so dass das zugehörige Telefon Sprachkommunikation über das Internet ausführen kann, und andererseits Datenübertragungen und Netzwerkdienste für eine Anzahl von Computern ausgeführt werden können.

Aus der DE 196 48 627 A1 ist ein Kommunikationssystem bekannt, mit dem wahlweise kontinuierliche oder paketorientierte Daten digital über eine anwenderseitig ortsfeste Netzanschlusseinheit gleichzeitig und gleichberechtigt Kommunikationsendgeräte wie Telefon, Telefax und Datenendgeräte wie Modem oder Computer mit einem öffentlichen Telekommunikationsnetz verbunden werden. Über eine IP-Adresse ist die Netzanschlusseinheit Bestandteil des Internet und lässt sich von den Datenendgeräten über das Internet-Protokoll steuern. Teilnehmerseitig verfügt die Netzanschlusseinheit über mindestens zwei Schnittstellen für herkömmliche Telefone, eine Schnittstelle für Datenendgeräte und über eine Schnittstelle zum Telekommunikationsnetz, die zellenorientiert arbeitet.

Der vorliegenden Erfindung liegt die Aufgabenstellung zugrunde, eine Kommunikationseinrichtung der eingangs genannten Art für eine xDSL- oder Breitbandverbindung zu schaffen, mit der analoge und/oder digitale Endgeräte über das Internet sowohl im öffentlichen Telekommunikationsnetz als auch im Internet und intern kommunizieren können.

Diese Aufgabenstellung wird erfindungsgemäß durch eine Kommunikationseinrichtung zur Bereitstellung von Verbindungen für einen Sprachdatentransfer und Digitaldatentransfer zwischen digitalen Telekommunikationsendgeräten, analogen Telekommunikationsendgeräten und Datenverarbeitungsgeräten gelöst, die aus einem xDSL-Terminaladapter zum eigenständigen Verbindungsaufbau und Verbindungsabbau sowohl in einem öffentlichen Telekommunikationsnetz als auch im Internet besteht, der
- ein xDSL-Modem, das an eine xDSL-Datenleitung oder an eine Breitbandverbindung angeschlossen ist,
- einen mit dem xDSL-Modem verbundenen ISDN-Signalwandler mit mindestens einem S₀-Buss-Anschluss für ISDN-Endgeräte und
- einen mit dem xDSL-Modem verbundenen Analog-Signalwandler mit mindestens einem a/b-Anschluss für analoge Endgeräte
enthält.

Die erfindungsgemäße Lösung stellt eine Kommunikationseinrichtung für eine xDSL- oder Breitbandverbindung bereit, mit der analoge und/oder digitale Endgeräte über das Internet sowohl im öffentlichen Telekommunikationsnetz als auch im Internet und intern kommunizieren können.

Der xDSL-Terminaladapter stellt somit einerseits eine Schnittstelle zwischen den analogen und/oder ISDN-Endgeräten und dem xDSL-Anschluss dar und wandelt unter anderem analoge in digitale Signale und umgekehrt digitale Signale in analoge Signale um. Dadurch können analoge und/oder ISDN-Endgeräte über das Internet unter Nutzung des Datenkanals telefonieren, das heißt Anrufe tätigen und empfangen, so dass nicht nur eine reine Internettelefonie möglich ist, sondern auch Telefonate im öffentlichen Telekommunikationsnetz geführt werden können.

Der Zugang des xDSL-Terminaladapters zum Internet wird wahlweise durch den xDSL-Anschluss oder eine Breitbandverbindung bereitgestellt. Dabei wird der Telefonkanal beispielsweise bei ADSL nicht genutzt oder der xDSL-Terminaladapter wird hinter einen Splitter geschaltet, das heißt an der Datenschnittstelle des Splitters, der zur Trennung in das ADSL- und das Telefon- oder ISDN-Signal dient und bei ADSL mit gleichzeitiger Telefonbenutzung auf einer Leitung mit unterschiedlichen Frequenzbereichen eingesetzt wird.

Dementsprechend kann der xDSL-Anschluss des xDSL-Terminaladapters mit der Datenschnittstelle eines ein ADSL-Signal von einem Telefon oder ISDN-Signal trennenden Splitter verbunden werden.

Das in den xDSL-Terminaladapter integrierte xDSL-Modem bildet dabei einen Signalwandler, der die Frequenzen der Telefonleitung so umwandelt, dass die im Netzwerk befindlichen Geräte mit dem Internet kommunizieren können. Der Analog-Signalwandler dient dazu, analoge Signale nach xDSL inklusive dem dazugehörigen Protokollaufbau umzuwandeln, damit die analogen Endgeräte, die über a/b-Schnittstellen an den xDSL-Terminaladapter angeschlossen werden, mit dem Netzwerk kommunizieren können und somit zu Bestandteilen des Netzwerkes werden. Der ISDN-Signalwandler dient dazu, ISDN-Signale nach xDSL einschließlich des Protokollaufbaus umzuwandeln, so dass die ISDN-Endgeräte über die S₀-Schittstelle direkt an den xDSL-Terminaladapter angeschlossen werden können.

Vorzugsweise wird mit dem xDSL-Terminaladapter ein paralleler Sprachdatentransfer zu mehreren analogen und/oder digitalen Telekommunikationsendgeräten sowie ein Digitaldatentansfer parallel zu einem oder mehreren Sprachdatentransfers bereitgestellt, so dass mehrere Telefonate gleichzeitig mit den analogen und/oder ISDN-Endgeräten und eine Datenübertragung beispielsweise von einem Personal Computer zeitgleich zu einem oder mehreren Telefonaten durchgeführt werden können.

Weiterhin kann der xDSL-Terminaladapter mit einem LAN-Port, der mit einem Local Area Network verbunden ist, sowie mit einem USB-Port versehen werden, der über einen USB-Signalwandler mit dem xDSL-Modem verbunden ist. Das Local Area Network (LAN) kann beliebig konfiguriert sein und eine beliebige Übertragungsgeschwindigkeit aufweisen, d.h. beispielsweise aus einem HSLAN (High Speed LAN) bestehen. Auch das angewandte Übertragungs- und Zugriffsverfahren des LAN ist beliebig und kann beispielsweise aus einem in der Norm IEEE802.3 festgelegten CSMA/CD (Carrier Sense Multiple Access/With Collision Detection), insbesondere dem Ethernet, FDDI (Fiber Distributed Data Interface), DQDB (Distributed Queue Dual Bus) oder dergleichen bestehen.

Damit gelangt unabhängig von dem Betrieb der analogen und/oder ISDN-Geräte beispielsweise ein Personalcomputer über die im xDSL-Terminaladapter vorhandene USB- und/oder LAN-Schnittstelle sowie über xDSL ins Internet.

Zur Konfiguration des xDSL-Terminaladapters kann ein Personalcomputer über den LAN-Port oder den USB-Port mit dem xDSL-Terminaladapter verbunden werden.

Eine weitere vorteilhafte Ausgestaltung der erfindungsgemäßen Lösung ist dadurch gekennzeichnet, dass die Vermittlungsfunktionen mit den Nebenstellentelefonen autonom vom xDSL erfolgen können.

Dadurch ist sowohl eine Vermittlungsfunktion von über den xDSL-Anschluss eingehenden Anrufen mit einer Weitervermittlung zu den ISDN-Endgeräten oder analogen Endgeräten sowie eine interne Kommunikation der ISDN-Endgeräte und der analogen Endgeräte untereinander sowie zwischen den ISDN-Endgeräten und den analogen Endgeräten ohne Einbeziehung des xDSL-Modems als auch ein digitaler Datentransfer zwischen mehreren an den xDSL-Terminaladapter angeschlossenen Rechnern möglich.

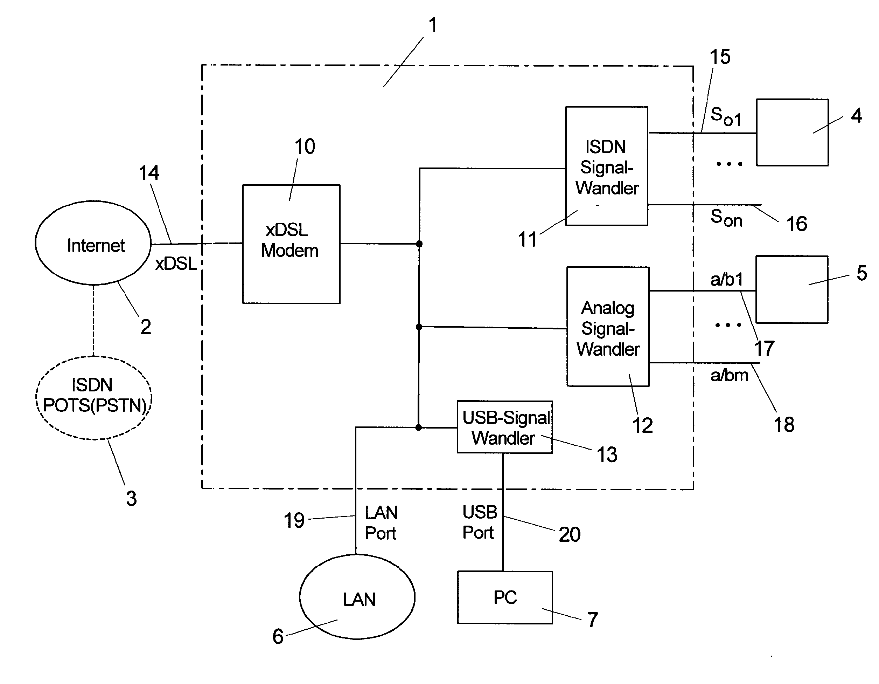

Anhand eines in der einzigen Figur der Zeichnung dargestellten Blockschaltbildes soll der Aufbau und die Funktion des erfindungsgemäßen xDSL-Terminaladapters näher erläutert werden.

Der erfindungsgemäße xDSL-Terminaladapter 1 enthält ein xDSL-Modem 10, das über einen xDSL-Anschluss 14 mit dem Internet 2 verbunden ist. Der Zugang zu einem öffentlichen Telekommunikationsnetz 3 in Form eines ISDN- oder POTS- bzw. PSTN-Netzes erfolgt unmittelbar oder über einen Service Provider.

An das xDSL-Modem 10 ist ein ISDN-Signalwandler 11 angeschlossen, der eine Anzahl von n S₀₁ bis S₀ₙ - Schnittstellen 15, 16 aufweist, an denen ISDN-Endgeräte 4 angeschlossen werden können, wobei n eine ganze Zahl größer oder gleich 1 ist. Der ISDN-Signalwandler 11 wandelt die ISDN-Signale nach xDSL einschließlich des Protokollaufbaus um, so dass die ISDN-Endgeräte 4 über das Internet 2, zu dem der Zugang durch xDSL oder eine Breitbandverbindung hergestellt wird, unter Nutzung des Datenkanals sowohl im Internet 2 als auch im öffentlichen Telefonnetz 3 telefonieren können.

Das xDSL-Modem 10 ist weiterhin mit einem Analog-Signalwandler 12 verbunden, der eine Anzahl von m a/b-Schnittstellen a/b₁ bis a/bₘ 17, 18 für analoge Endgeräte 5 bereitstellt, wobei m eine ganze Zahl größer oder gleich 1 und gleich oder ungleich der Anzahl n S₀-Schnittstellen 15, 16 ist. Der Analog-Signalwandler 12 wandelt analoge Signale nach xDSL inklusive dem dazugehörigen Protokollaufbau, so dass die analogen Endgeräte 5 über die Anzahl von m a/b-Schnittstellen 17, 18 ebenfalls über xDSL oder eine Breitbandverbindung in das Internet 2 unter Nutzung des Datenkanals telefonieren, das heißt Anrufe tätigen und empfangen können.

Über einen LAN-Port 19 kann der xDSL-Terminaladapter 1 mit einem Personal Computer und/oder einem Local Area Network 6 verbunden werden. Über einen USB-Port 20 und einen USB-Signalwandler 13 kann ein Personal Computer 7 an das xDSL-Modem 10 angeschlossen werden, so dass mittels des Personal Computers 7 oder einem Rechner des Local Area Networks 6 die Konfiguration des xDSL-Termialadapters 1 durchgeführt werden kann, wobei das Betriebssystem des verwendeten Rechners offen ist.

Da der xDSL-Terminaladapter 1 aufgrund seiner inneren Struktur weitestgehend die Aufgabe und Funktion einer Telekommunikationsanlage erfüllen kann, sind auch Vermittlungsfunktionen von über den xDSL-Anschluss 14 eingehenden Anrufen mit einer Weitervermittlung zu den ISDN-Endgeräten 4 und den analogen Endgeräten 5 möglich. Auch eine interne Kommunikation der ISDN-Endgeräte 4 und der analogen Endgeräte 5 untereinander sowie zwischen den ISDN-Endgeräten 4 und analogen Endgeräten 5 ohne Einbeziehung des xDSL-Modems 10 können mit dem xDSL-Terminaladapter 1 durchgeführt werden.

Des weiteren ist auch ein digitaler Datentransfer beispielsweise zwischen einem am USB-Port 20 angeschlossenen PC 7 und einem oder mehreren über den LAN-Port 19 mit dem xDSL-Terminaladapter 1 verbundenen Rechnern des Local Area Networks 6 gleichzeitig mit mehreren Telefonaten möglich.

### Bezugszeichenliste

- 1: xDSL-Terminaladapter
- 2: Internet
- 3: Öffentliches Telekommunikationsnetz
- 4: ISDN-Endgeräte
- 5: analoge Endgeräte
- 6: Local Area Network
- 7: Personal Computer
- 10: xDSL-Modem
- 11: ISDN-Signalwandler
- 12: Analog-Signalwandler
- 13: USB-Signalwandler
- 14: xDSL-Anschluss
- 15, 16: S₀-Schnittstellen
- 17, 18: a/b-Schnittstellen
- 19: LAN-Port
- 20: USB-Port

## Patentansprüche

1. Kommunikationseinrichtung zur Bereitstellung von Verbindungen für einen Sprachdatentransfer und Digitaldatentransfer zwischen digitalen Telekommunikationsendgeräten, analogen Telekommunikationsendgeräten und Datenverarbeitungsgeräten,
**gekennzeichnet durch**
einen xDSL-Terminaladapter (1) zum eigenständigen Verbindungsaufbau und Verbindungsabbau sowohl in einem öffentlichen Telekommunikationsnetz (ISDN, POTS, PSTN 3) also auch im Internet (2) mit
- einem xDSL-Modem (10), das an eine xDSL-Datenleitung (14) oder an eine Breitbandverbindung angeschlossen ist,
- einen mit dem xDSL-Modem (10) verbundenen ISDN-Signalwandler (1) mit mindestens einem S₀-Anschluss (15, 16) für ISDN-Endgeräte (4) und
- einen mit dem xDSL-Modem (10) verbundenen Analog-Signalwandler (12) mit mindestens einem a/b-Anschluss (17, 18) für analoge Endgeräte (5).

2. Kommunikationseinrichtung nach Anspruch 1, **gekennzeichnet durch** eine parallele Sprachdatentransfer zu mehreren analogen und/oder digitalen Telekommunikationsendgeräten (4, 5).

3. Kommunikationseinrichtung nach Anspruch 1 oder 2, **gekennzeichnet durch** einen digitalen Datentransfer parallel zu einem oder mehreren Sprachdatentransfer(s).

4. Kommunikationseinrichtung nach mindestens einem der voran stehenden Ansprüche, **dadurch gekennzeichnet, dass** der xDSL-Terminaladapter (1) einen mit einem Local Area Network (LAN 6) verbundenen LAN-Port (19) aufweist.

5. Kommunikationseinrichtung nach mindestens einem der voran stehenden Ansprüche, **dadurch gekennzeichnet, dass** der xDSL-Terminaladapter (1) einen USB-Port (20) aufweist, der über einen USB-Signalwandler (13) mit dem xDSL-Modem (10) verbunden ist.

6. Kommunikationseinrichtung nach Anspruch 4 oder 5, **dadurch gekennzeichnet, dass** der xDSL-Terminaladapter (1) über den LAN-Port (19) oder den USB-Port (20) mit einem Personalcomputer (7) zur Konfiguration des xDSL-Terminaladapters (1).

7. Kommunikationseinrichtung nach mindestens einem der voranstehenden Ansprüche, **gekennzeichnet durch** eine Vermittlungsfunktionen von über den xDSL-Anschluss (14) eingehenden Anrufen mit einer Weitervermittlung zu den ISDN-Endgeräten (4) oder analogen Endgeräte (5) sowie eine interne Kommunikation der ISDN-Endgeräte (4) und der analogen Endgeräte (5) untereinander sowie zwischen den ISDN-Endgeräten (4) und den analogen Endgeräten (5) ohne Einbeziehung des xDSL-Modems (10).

8. Kommunikationseinrichtung nach mindestens einem der voranstehenden Ansprüche, **gekennzeichnet durch** einen digitaler Datentransfer zwischen einem am USB-Port (20) angeschlossenen Personal Computer (7) und einem oder mehreren über den LAN-Port (19) mit dem xDSL-Terminaladapter (1) verbundenen Rechner des Local Area Networks (6).

9. Kommunikationseinrichtung nach mindestens einem der voran stehenden Ansprüche, **dadurch gekennzeichnet, dass** der xDSL-Anschluss (14) des XDSI-Terminaladapters (1) mit der Datenschnittstelle eines ein ADSL-Signal von einem Telefon- oder ISDN-Signal trennenden Splitters verbunden ist.
